(19) **Europäisches Patentamt**
**European Patent Office**
**Office européen des brevets**

(11) **EP 4 600 066 A1**

(12) **EUROPEAN PATENT APPLICATION**

(43) Date of publication:
**13.08.2025 Bulletin 2025/33**

(21) Application number: **24156500.1**

(22) Date of filing: **08.02.2024**

(51) International Patent Classification (IPC):
**B60K 35/10** (2024.01)

(52) Cooperative Patent Classification (CPC):
**B60K 35/10; G06F 3/017;** B60K 2360/1464;
B60K 2360/21; B60K 2360/741; G06V 20/59

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Valeo Comfort and Driving Assistance
94000 Créteil (FR)**

(72) Inventors:
• **Tamam, Mahmoud
12577 Cairo (EG)**
• **Gomaa, Fatma
12577 Cairo (EG)**
• **Ghareeb, Moustafa
12577 Cairo (EG)**
• **Raouf, Samira
12577 Cairo (EG)**

(74) Representative: **Ralf, Thorge
Valeo Schalter und Sensoren GmbH
Laiernstraße 12
74321 Bietigheim-Bissingen (DE)**

(54) **METHOD AND SYSTEM FOR CONTROLLING A HUMAN-MACHINE INTERFACE IN A VEHICLE**

(57)    The invention relates to a method of controlling a human-machine interface (200) in a vehicle (100), the human-machine interface (300) comprising an input device (104, 105) for receiving a user input and a display device (103) for displaying a graphical user interface. The method comprises: obtaining monitoring data of at least a portion of a passenger compartment of the vehicle (100) by means of the input device, the input device comprising a detection device (104, 105) with a detection area (106) that overlaps the portion of the passenger compartment, wherein the portion of the passenger compartment includes at least two seats (101) of the vehicle (100); processing the monitoring data to obtain hand gesture data from the monitoring data by detecting in the monitoring data a hand gesture performed by a passenger (102) of the vehicle (100) as the user input; determining one of the at least two seats (101) in which the passenger (102) is seated who performs the hand gesture for which the hand gesture data are obtained; and controlling the graphical user interface depending on the detected hand gesture and the determined seat.

**Fig. 1**

EP 4 600 066 A1

**Description**

The present invention relates to a method and system for controlling a human-machine interface in a vehicle. In particular, the method and system detect hand gestures as user input in a vehicle.

Modern vehicles, such as cars, often have a wide range of functions, which usually include various vehicle or comfort functions, such as navigation system settings, air conditioning, seat settings, lighting settings and the like. Various functions of an infotainment system can also be operated, such as playing music, making phone calls and the like. A user, in particular the driver or another passenger, such as the co-driver, may interact with the vehicle via a human-machine interface, which may have an input device for receiving user input and a display device to display a graphical user interface (GUI). Specifically, at least one display is usually provided as part of the user interface to display and control the functions, for example centrally in the dashboard. The individual functions, menus and the like can be displayed here. These displays are often touch-sensitive so that the desired function can be controlled by touching the display. Other displays are known, such as head-up displays that display a GUI in the windshield of a vehicle.

In vehicles, contactless control of functions is known using gestures, in particular hand gestures. For this purpose, a user performs certain predefined gestures in a defined spatial area, for example in a spatial area of the vehicle cabin above the center console or in front of the dashboard, particularly a respective display, which are detected by a corresponding detection device, such as a camera or other sensor. This may require the system to be calibrated in the global coordinates of the vehicle, which specify the defined spatial area in relation to the display in which the gestures are to be performed.

Generally, gesture control solutions help to avoid car accidents as the solution tends to help the driver or passenger to keep an eye on the road while controlling some features of the car, so they won't get distracted by the car console or dashboard and reduce their attention span needed to control vehicle functionalities. However, in case a driver and a passenger are present in a vehicle, hand movements of both persons may be interpreted as hand gestures, which may lead to interruption or interference of gesture controls. Also, if a passenger like the co-driver is performing hand gestures, the driver might get disturbed by the display of the graphical user interface the other passenger is interacting with.

It is an object of the present invention to provide an improved approach for controlling a human-machine interface in a vehicle. Specifically, it is desirable to improve detection of user inputs in a vehicle made by hand gestures.

A solution to this problem is provided by the teaching of the independent claims. Various preferred embodiments of the present invention are provided by the teachings of the dependent claims.

A first aspect of the invention is directed to a, particularly computer-implemented, method of controlling a human-machine interface in a vehicle. The human-machine interface comprises an input device for receiving a user input and a display device for displaying a graphical user interface. The method comprises obtaining monitoring data of at least a portion of a passenger compartment of the vehicle by means of the input device. The input device comprises a detection device with a detection area that overlaps the portion of the passenger compartment, wherein the portion of the passenger compartment includes at least two seats of the vehicle. The method further comprises processing the monitoring data to obtain hand gesture data from the monitoring data by detecting in the monitoring data a hand gesture performed by a passenger of the vehicle as the user input, determining one of the at least two seats in which the passenger is seated who performs the hand gesture for which the hand gesture data are obtained, and controlling the graphical user interface depending on the detected hand gesture and the determined seat. Furthermore, a function of the vehicle associated with the hand gesture may be controlled.

The method of the first aspect, thus, not only considers a detected hand gesture but also where in the passenger compartment the hand gesture is performed. More specifically, the method can determine the seat of the vehicle, and thereby the person, such as the driver or another passenger, who performs the hand gesture. The HMI is controlled depending on the hand gesture and the determined seat. In other words, the method not only monitors one person, such as the driver, or only a single detection area, e.g., in the center of the vehicle but monitors a portion of the passenger compartment that includes at least two seats, e.g., the two front seats. This allows an improved control in that more than one user is enabled to take over control, wherein the control depends also on the position of the user in the vehicle. For example, specific functions can be enabled for different users, which may reduce distraction of the driver while at the same time providing full control for a passenger.

The term "vehicle", as used herein, refers particularly to a car, including any type of motor vehicles, hybrid electric vehicles and battery electric vehicles as well as other vehicles like trucks, vans, or busses. The vehicle may have a passenger compartment (also referred to as "cabin") with one or more seats for passengers of the vehicle, including the driver and possibly a co-driver.

The term "human machine interface" (HMI), as used herein, refers to a system that enables interaction between a user and a machine. In the context of the present invention, the HMI refers to the interfaces through which the driver or passengers can interact with the vehicle. Interaction may be performed particularly to control a function of the vehicle. More specifically, hand gestures may be used to control the functions, in particular via a graphical user interface (GUI). Thus, the HMI includes an input device, in particular a detection device configured to detect a hand of a user, e.g., a camera. Further, an "output device", in particular a display device is provided to display the GUI.

The term "user interface" or "graphical user interface" used here refers in particular to a graphical representation of control elements that are linked to a specific function and allow a user to control the function. The user interface (UI) or graphical user interface (GUI) may contain control elements, such as input surfaces, buttons, symbols, buttons, icons, sliders, toolbars, selection menus and the like, which a user can actuate, in particular in the sense of the present invention, without touching them. In particular, the GUI may be displayed on a display device, such as a display, screen, monitor and the like.

The term "gesture", as used herein, refers in particular to a posture or movement of a user, in particular a part of the user's body such as left hand, right hand or both hands. Thus, the "gesture" may also be referred to as "hand gesture". The hand gesture may include a position and orientation of a hand in a three-dimensional space, including movements, as well as positions or movements of one or more fingers of the hand. In particular, a hand gesture may take into account a pointing gesture, in which a direction of a "pointing finger", which is typically the index finger, is determined. A gesture is detected and processed as a user input.

The term "user input", as used herein, refers in particular to a user's interaction with the HMI (or graphical user interface). This can be a simple movement of a pointer (also called "cursor") on the graphical user interface or the control of a function, such as selecting and activating a control element (in particular by a "click" or "double-click"), navigating through the user interface (e.g., "scrolling"), changing the display of objects or control elements, including moving objects (in particular "drag-and-drop").

The term "input device", as used herein, refers in particular to a device for receiving user input. While any kind of user input could be received, the "input device" of the present invention may in particular be a "detection device".

The term "detection device", as used herein, refers in particular to a device that can contactlessly detect objects in three-dimensional space and determine their position. In particular, the detection device can detect a user's hand. For example, optical methods can be used to detect a user's hand in space. The detection device may consist of one or more parts, depending on which detection area is to be covered. For example, a (2D) camera can be provided or a 3D sensor. The detection area is the area within which events or changes can be perceived by the detection device, i.e., in the context of the present disclosure in particular the area (or more precisely the three-dimensional spatial area) in which a hand can be detected. In the case of cameras or other optical detection devices or sensors, this can in particular also be referred to as the "field of view" (FOV).

The term "function", as possibly used herein, refers in particular to technical features that may be present in a vehicle, for example in the interior, in order to be controlled by a corresponding control system. In particular, these can be functions of the vehicle and/or an infotainment system, such as lighting, audio output (e.g., volume), air conditioning, telephone, etc.

If applicable, the terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun e.g., "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In the following, preferred embodiments of the method are described, which can be arbitrarily combined with each other or with other aspects of the present invention, unless such combination is explicitly excluded or technically impossible.

In some embodiments, the method further comprises processing the monitoring data so as to obtain seat occupancy data, the seat occupancy data specifying for each of the at least two seats a respective seat occupancy state, wherein the seat occupancy data are obtained before processing the monitoring data to obtain the hand gesture data. In particular, bounding boxes can be used per seat to identify whether a seat is occupied or not. Considering the seat occupancy state for each state, including detecting and tracking the seat occupancy can improve consistency of non-interrupted control of the HMI. Knowing the seat occupancy state for each seat can also be used to assign priority to driver interaction over passengers, or to enable only driver to control.

In some embodiments, the hand gesture data are obtained only for seats for which the seat occupancy state is determined as occupied, wherein processing the monitoring data to obtain hand gesture data comprises determining a bounding box of one hand or both hands of a passenger in an occupied seat. This may improve stability of the control method because hand gesture data can only be present for a seat that is actually occupied. Vice versa, monitoring data in the region of unoccupied seat logically cannot deliver hand gesture data. For every occupied seat, right and left hand palms may be detected, e.g., using a mobile realtime deep learning object detection model. This may then also result in right and left detected hand bounding boxes for every occupied seat, which may facilitate detection of hand gestures when limited to the relevant bounding boxes of the hands.

In some embodiments, while a hand gesture is detected for a passenger, any hand gesture of any other passenger is disregarded. In particular, using the seat occupancy state, in particular by detecting and tracking seat occupancy it is possible to keep track of the interaction gesture without any interruption from other hand motion within the vehicle which can happen normally with multiple passengers' hands motion. In other words, once a hand gesture is detected, interaction may only be allowed from the same seat and hand that initiated the interaction. The rest of the seat detections may be ignored such that the gesture controls are not interrupted by hand movements of other passengers.

In some embodiments, controlling the graphical user interface comprises displaying the graphical user interface at a position on the display device that depends on the position of the seat in which the passenger is seated who performs the hand gesture. This may improve the interaction with the HMI as the HMI can be designed to not affect the driving experience when the position of the GUI, such as widgets or icons changes based on the seat that initiated the gesture control in order to enhance the user experience.

In some embodiments, processing the monitoring data to obtain hand gesture data comprises detecting a plurality of landmarks for a respective hand, wherein the hand gesture performed by the passenger is detected using the detected landmarks. By using landmarks of a hand instead of e.g., the whole image of the hand, detection of gestures is less sensitive to background noise and requires less processing time. Landmarks may be prominent key points on the hand, such as fingertips and joints. When starting from the wrist, a hand may be described particularly by 21 landmarks. In this way, a gesture, hand posture or pointing direction can be easily detected or classified. Specifically, computational resources may be reduced when using a model of landmarks rather than e.g., relying on image recognition of the whole image. In particular, the aforementioned bounding boxes of the hands may describe the area in which the landmarks can be found. A model, such as a mobile deep learning regressor network can be used to detect 21 landmarks for every detected hand's bounding box. This allows to have small and real time gesture classifiers (see below), wherein classifiers are invariant to any lightning conditions since gesture classifiers now depend only on the detected landmarks as input without the image itself or background interference.

In some embodiments, the detected landmarks are input into a gesture classification model, wherein an output of the gesture classification model specifies the hand gesture performed by the passenger. In other words, for the gesture classification, the landmarks (particularly occupied tracked seat right and left hand landmarks) may be passed to a classifier network that takes the 21 landmarks as input and classify the hand gestures. Using a gesture classification model that uses landmarks of detected hands allows to have more robust predictions without hand background image interference and also real time predictions of hand motion classification. In contrast to that, processing hand gestures directly from captured images without any prior processing would have very low performance as multiple hands could appear in the captured image inside the cabin.

In some embodiments, the hand gesture specified by the gesture classification model includes at least one of a hand posture classification and a pointing finger motion classification. This means that the model may be capable of distinguishing two types of hand gestures, namely (still) hand postures and (moving) pointing actions. The pointing finger may be particularly the index finger.

In some embodiments, the method further comprises determining a projection of a pointing finger to a location on the display device, wherein the projection is determined by determining a finger vector direction using the landmarks of the respective finger. The projection may provide a conversion from 3D coordinates of the hand in the cabin of the vehicle to 2D coordinates on the display device, which may be e.g., the windshield when the display device is provided as a head-up display. This may be done by using the camera calibration parameters and the pointing finger index coordinates to get a projection on the display device. This allows to use the pointing finger to move a cursor or other items of the GUI.

In some embodiments, if the hand gesture is classified as a pointing finger motion classification, the hand gesture is determined by processing the monitoring data for at least two subsequent points in time ("frames"). This allows tracking the movement of the hand, more specifically the pointing finger. For instance, the index/pointing finger landmark positions can be recorded, and a queue for a short time stamp of processed frames can be filled. Once the queue is full, a pointing finger motion classification deep learning model can be evaluated with the index/pointing finger position of all entries in the queue. This may lead to different classifications, such as "not moving", "moving", "clockwise motion", "anti-clockwise motion". It will be appreciated that, if any hand gesture rather than pointing finger gesture is detected during the queue filling time, the queue can be emptied in order not to carry information from interrupted gestures.

In some embodiments, processing the monitoring data to obtain hand gesture data comprises determining 3D coordinates of the detected landmarks. Gesture recognition can be improved if the 3D world coordinates of the landmarks are known. Processing can be faster and more cost efficient, in particular compared to extensive image recognition or detection of hand gestures e.g., from a large number of points in a radar point cloud. A deep learning model can be used, which gets the coordinates as input.

A second aspect of the present invention is directed to a data processing system being configured to perform the method of the first aspect. The data processing system might specifically be configured by means of one or more computer programs to perform the method of the first aspect. In addition, or alternatively, the configuration may be implemented, in whole or in parts by respective hardware. The system has at least one display device, which is configured to display the graphical user interface, and an input device configured to receive a user input.

In some embodiments of the system, the display device comprises at least one display, monitor, screen or the like, which is arranged in a vehicle, for example as part of an infotainment system. In particular, the display device may be a head-up display (HUD) that is configured to display an image in a windshield of a vehicle.

In some embodiments of the system, the input device comprises a detection device, which comprises at least one image detection device, in particular a camera and/or at least one 3D sensor. A camera can be used to easily determine the position of a user's hand in three-dimensional space. One camera or several cameras can be provided as the detection device. In particular, in a vehicle a back camera and a front camera can be provided to cover a large detection area in the passenger compartment of the vehicle. The camera(s) may be an infrared camera or may capture images in the visible spectrum of light. The camera(s) may be a time-of-flight camera (ToF camera). By using such a 3D sensor device, the position of the hand in three-dimensional space and its movement can be detected directly. 2D sensors can also be combined to detect the position of the hand in three-dimensional space. As explained above, the field of view of the at least one camera extends over a portion of the passenger compartment of the vehicle with at least two seats of the vehicle, preferably two front row seats, or up to all seats of the vehicle. In this way, hand gestures made by any passenger of the vehicle can be detected.

A third aspect of the present invention is directed to a computer program or a computer program product, comprising instructions, which when executed on a data processing system according to the second aspect of the invention cause the system to perform the method according to the first aspect of the invention.

The computer program (product) may in particular be implemented in the form of a data carrier on which one or more programs for performing the method are stored. Preferably, this is a data carrier, such as a CD, a DVD or other optical medium, or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g., the internet or a dedicated data connection, such as a proprietary or local area network.

The system of the second aspect may accordingly have a program memory in which the computer program is stored. Alternatively, the system may also be set up to access a computer program available externally, for example on one or more servers or other data processing units, via a communication link, in particular to exchange with it data used during the course of the execution of the computer program or representing outputs of the computer program.

The explanations, embodiments and advantages described above in connection with the method of the first aspect similarly apply to the other aspects of the invention.

Further advantages, features and applications of the present invention are provided in the following detailed description and the appended drawings, wherein:

**Fig.** 1 shows a bird's eye view of a vehicle with a driver and a human-machine interface;

**Fig.** 2 schematically illustrates the functionality of a human-machine interface;

**Fig.** 3 shows a flowchart of a method of controlling a human-machine interface;

**Fig.** 4 schematically illustrates landmarks of a hand;

**Fig.** 5 schematically illustrates projection of a pointing direction to a display device;

**Fig.** 6 shows a view through the windshield of a vehicle with a displayed graphical user interface controlled by the driver; and

**Fig.** 7 shows a view through the windshield of a vehicle with a displayed graphical user interface controlled by the co-driver.

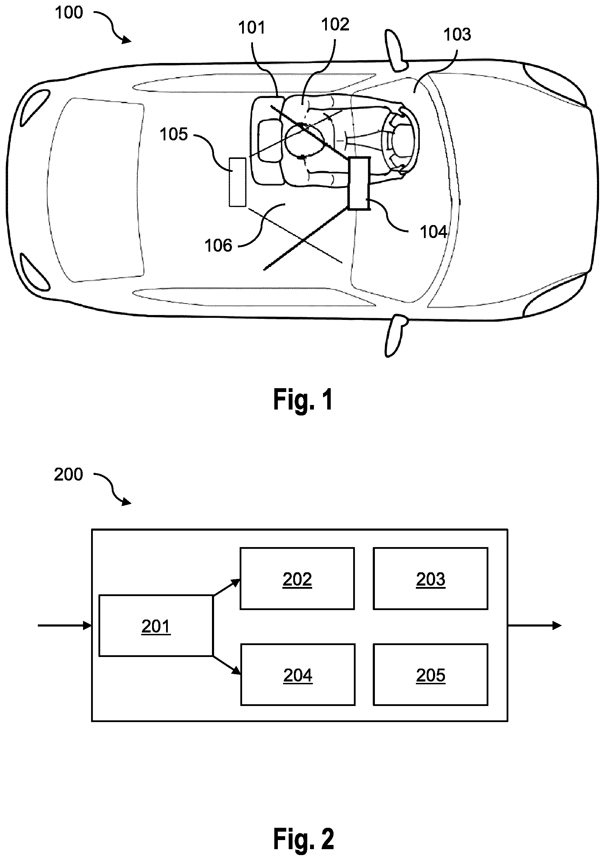

**Fig.** 1 shows a vehicle 100 which is equipped with a human-machine interface (HMI) 200 to allow the driver 102 or another passenger of the vehicle 100, such as the co-driver, to interact with the vehicle 100. In particular, a graphical user interface (GUI) can be controlled along with an associated function of the vehicle 100. Examples will be set forth in more detail below. A diagram of the components or functionalities of the HMI 200 is schematically illustrated in **Fig. 2.**

The HMI 200 has an input device for receiving a user input. More specifically, the input device is configured as detection device to detect a hand gesture of a user, such as the driver 102. In particular, one or more cameras 104, 105 are provided to monitor the passenger compartment (cabin) of the vehicle 100. As shown in Fig. 1, a front camera 104 and a back camera 105 are provided to cover a detection area 106 in which hand gestures can be detected. The detection area 106 extends over a portion of the passenger compartment with at least two seats, such as the driver seat 101 and the co-driver seat (not shown). In this way, the HMI 200 can detect hand gestures of both, the driver 102 and the co-driver. A display device 103 is provided to display the GUI. In this example, the display device 103 is a head-up display (HUD) for the windshield of the vehicle 100.

Before the method of controlling the HMI 200 will be described in more detail, basic functional components of the HMI 200 are briefly explained with reference to Fig. 2. A gesture is detected and input to recognize it as a movement or action (process 201). It is determined where the gesture was made in the vehicle, i.e., from which seat or which user. In other words, it is differentiated between the driver's hand and the co-driver's hand (process 202). Depending on the identified user (driver or co-driver) a cursor of the GUI is moved to a desired position (process 203). In particular, if the driver performs the hand gesture, the cursor may appear on the driver's side of the windshield, whereas the cursor may appear on theco-driver's side of the windshield if the co-driver is determined to perform the hand gesture. Also, it is decided whether the gesture is a valid gesture or not (process 204), which may depend on a current application that is controlled by the respective user. Actions are then taken depending on the gesture and the current user as well as the current application (process 205). A respective output of the GUI on the display device 103 is provided.

That being said, the overall process will be explained. This may particularly comprise certain deep learning techniques. In order to detect or capture gestures made by any passenger of the vehicle 100, front and back seat images are captured by the front and back cabin monitoring cameras 104, 105. The front and back images are processed by a seat occupancy object detection deep learning model to determine whether a seat is occupied or not. This may be done using respective bounding boxes per seat. This step is done to ensure consistency of non-interrupted interaction with the HMI. By tracking the occupancy state, it can be ensured that an operation (hand gesture control) started by one of the users can be finished by this user. During an active hand gesture control, gestures of other passengers can be ignored. Also, gestures may only be detected for seats that are actually occupied. It may also be envisioned to assign priority to driver interaction over passengers, or to enable only driver to control if configured.

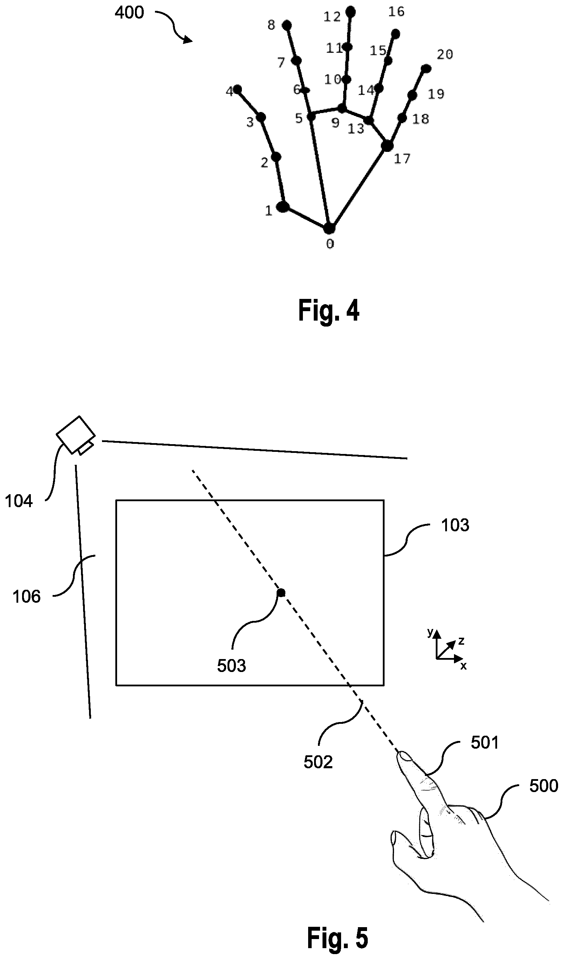

For every occupied and tracked seat bounding box, bounding boxes for the right and left hand palms are detected, particularly with a mobile real-time deep learning object detection model. This results for every occupied detected and tracked seat in a right and left detected hand bounding box. Then in order to get the classification of gestures robustly, instead relying on the hand image itself, an intermediate step is executed, which is to detect hand landmarks 400 (see Fig. 4). A mobile deep learning regressor network may be used to detect 21 landmarks for every detected hand's bounding box. This allows to have a very small and real time gesture classifier, wherein classifiers are invariant to any lightning conditions since gesture classifiers now depend only on the detected landmarks 400 as input without the image itself or background interference.

For the gesture classification, every occupied tracked seat right and left hand landmarks are passed to a (very small) classifier network that takes the 21 landmarks as input and classifies the hand gestures that are of interest for control of the HMI. In case a pointing finger gesture is classified, the index (pointing) finger landmark positions are recorded (landmarks 5, 6, 7, 8), and a queue is filled for a short period of time of processed frames. Once the queue is full, the pointing finger motion classification deep learning model is evaluated with the index finger position of all entries in the queue. The model may detect the following classes: "not moving", "moving", "clockwise motion", "anti-clockwise motion". If any hand gesture rather than pointing finger gesture is detected during the queue filling time, the queue is emptied in order not to carry information from interrupted gesture.

As will be described in more detail also below, the pointing direction of the index finger is projected onto the display device 103. Camera calibration parameters along with the pointing finger index coordinates (more specifically, the 3D coordinates of the landmarks 5, 6, 7 and 8) may be used to get a projection on the (2D) windshield head-up display screen. An application manager may then transfer the information detected by the described algorithm (projected pointing finger x, y location of the HUD windshield screen, hand gesture classification, pointing finger motion classification) through a shared memory to the HMI application.

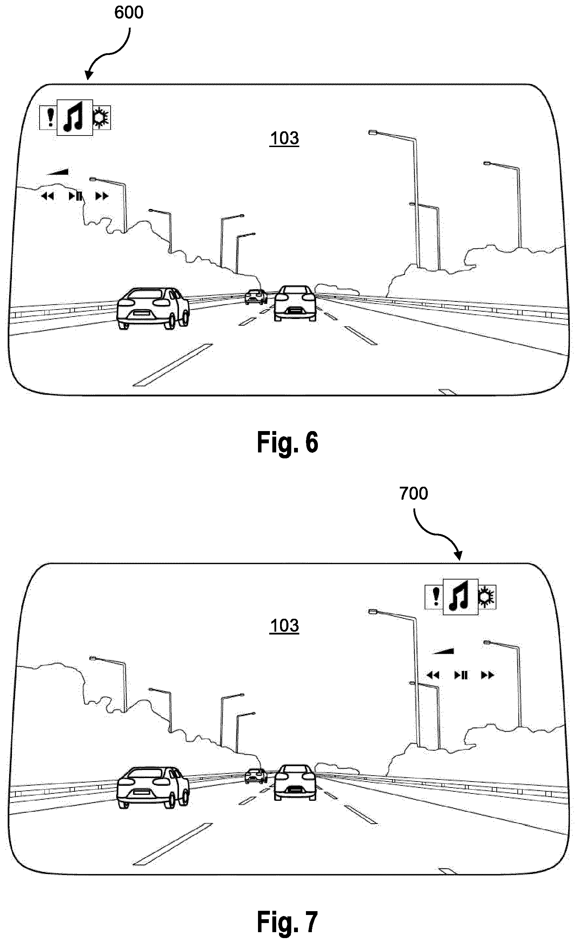

The HMI 200, in particular the GUI should be designed to not affect the driving experience. So, the GUI may have a transparent design, i.e., icons, widgets and the like may appear on the windshield with a certain transparency. Also, the position of the GUI changes based on the seat that initiated the gesture control in order to enhance the user experience (see Fig 6 and Fig. 7, respectively). Interaction may be initiated when one of the users on the occupied seats starts with a certain hand gesture, such as an "open hand gesture". The HMI 200 also keeps tracking of the seat that has initiated the interaction and ignores the detections of other seats. Thus, the gesture controls are not interrupted by hand movements of other passengers inside the cabin of the vehicle 100. When the HMI 200 receives a pointing finger gesture from the tracked and gesture enabled seat, the cursor is moved based on the projected pointing finger location to enable the gesture interaction initiator to move through and select HMI widgets.

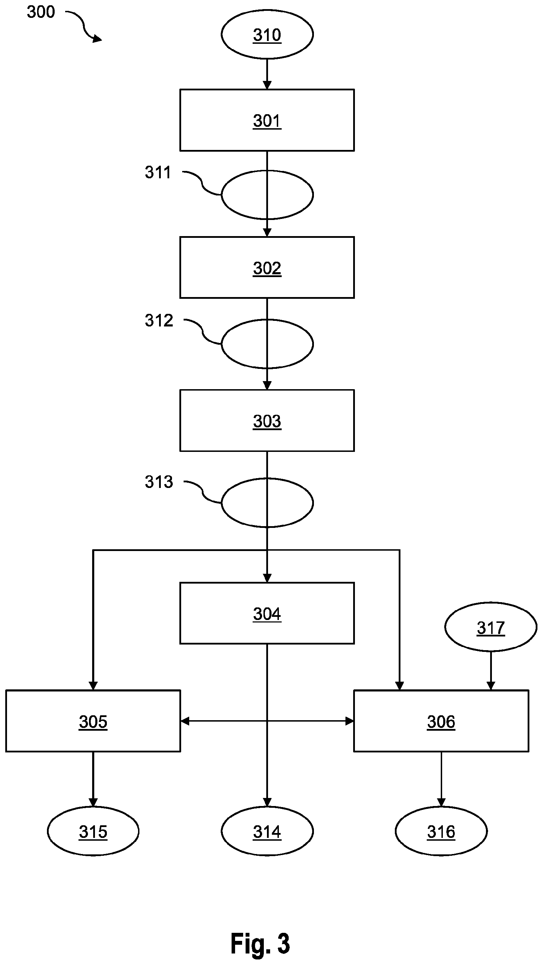

The aforementioned process is further described below by way of example particularly with reference to Fig. 3. Seat occupancy is determined in process 301. In particular, a captured image 310 is processed using an object detection model that detects the following classes: human body, human hands. Human body detected bounding boxes 311 are processed, and each bounding box is assigned to predefined and preconfigured seat positions through a parametric algorithm that uses the maximum intersection of bounding boxes area and minimum intersection threshold. This may reduce the number of false positives in the detection.

Hand palm detection is then performed in process 302. The output (bounding boxes 311) of the previous object detection model is processed. This may use the same parametric algorithm as in seat occupancy, but now detected hands are assigned to the assigned occupied seats human bounding boxes 311, which results in left/right hand bounding boxes 312 for occupied seats.

Then, hands landmarks regression is performed in process 303. In this process, a batch of number of detected hands (more specifically, the image cropped to the left and right hand bounding boxes 312) is passed to a deep learning hand landmark regression model that detects 21 landmarks 313 in 3D world coordinates (x, y, z). So, for every occupied seat, this results in 21 landmarks for the right and left hands, which are illustrated as landmarks 400 in Fig. 4.

Hand gesture classification is then performed in process 304 using the detected landmarks 313. This component is particularly responsible to classify the instant hand sign class without looking into previous frames. For the classification, a minimal deep learning model may be used that takes the hand landmarks relative position in (x, y) from the hand landmark origin point 0 (wrist) as input. More specifically, the model may be designed to use the hand landmarks relative position instead the image itself, so that the model becomes independent from the image lighting conditions changes that could affect the classification quality. Also, it helps the gesture classification to be very light since it does not process the whole image space but only a 2D vector of 21 landmarks. Output 314 is the instant hand gesture/sign classification for every occupied seat left and right hand. Hand gestures may be, e.g., open, close, pointing finger, click, up, down, right, left, etc.

Further, temporal pointing finger classification is performed in process 305. The pointing finger gesture may be considered particularly important. Once this gesture is detected by hand gesture classification 304, the temporal pointing finger classification component 305 starts processing the (x, y) position of pointing finger (typically the index finger), wherein a temporal aspect is classified to detect movements. In particular, multiple frames over time of the pointing finger motion class are classified. For the temporal classification, an LSTM deep learning model architecture may be used with minimal implementation. It takes the position of the pointing finger, particularly the landmark 8, and outputs (315) the temporal pointing finger motion class for every occupied seat. The following classes may be determined: idle, moving, clockwise and anticlockwise.

Pointing finger projection may then be performed in process 306, which will be described in further detail below. The pointing finger, which is described by the landmarks 5, 6, 7 and 8 in a 3D vector, is projected onto a 2D location (316) on the display device 103 (i.e., the windshield HUD), which allows accurate and smooth interaction. This process may use camera calibration parameters 317 and the 3D world coordinates to estimate the projected 2D image coordinates on the HUD image space.

To sum up, the aforementioned approach is able to identify two main types of gestures, which may be referred to as "hand signs" (or hand postures) and temporal pointer finger signs (i.e., movements or motions). For the hand signs, the hand gesture classification 304 at one time frame does not require any temporal dependency. For the temporal pointer finger signs, the pointer finger motion gesture classification 305 over multiple frames (moving window), requires motion dependency. It will be appreciated that the instant hand sign classification gestures and the temporal pointer finger sign classification gestures are not limited but totally depend on the number of required gestures by a desired HUD interaction application.

Now particularly referring again to Fig. 4 as well as to Fig. 5, a specific example of the projection of the hand 500 (more specifically index or pointing finger 501) onto the display device 103 is described. As already mentioned above with respect to Fig. 1, the camera setup shall be configured such that the detection area 106 is large enough to cover hand motions inside the vehicle 100 for more than one seat. At least two cameras 104, 105 may be provided, wherein a front camera 104 and a back camera 105 may be provided. It is noted that, since the 3D hand landmarks model 400 detects 3D coordinates in world space, the direction and position depend on the vehicle model with the condition that the detection area 106 covers all hand motion scenarios so it does not restrict the gesture detection.

Using the pointing finger 3D landmarks 5, 6, 7, 8, a 3D vector of the pointing direction 502 can be estimated in world coordinates. The finger vector may be defined as the ray vector:

$$Ray(t) = (x_i t, \ y_i t, t)$$

The screen plane of the display device may be defined as:

$$Ax + By + Cz + D = 0$$

Combining the 3D plane and 3D vector results in:

$$Ax_i t + By_i t + Ct + D = 0$$

$$t = \frac{-D}{Ax_i + By_i + C}.$$

By substituting t into Ray(t) the intersection point on the screen of the display device 103 is obtained.

The hand gestures either from the driver 102 or from another passenger, such as the co-driver are input to the HMI 200 to control various functions of the vehicle, such as music player, door lock, AC, windows, messages, phone calls, etc. The driver 102 and the passenger (co-driver) may have their own view for better visualization and easier control. For instance, when the driver 102 takes control, the GUI 600 is shown to the left (in front of the driver) as illustrated in **Fig. 6,** and in case of the co-driver taking control, the GUI 700 is shown to the right (also to not disturb the driver) as shown in **Fig. 7**. Fig. 7 and 8 show a music player app as an example.

When the vehicle 100 is moving, most of the controls should be deprived from the driver 102 for more safety, so for example if the driver 102 tries to diagnose the car while exceeding a certain speed limit, they will not be able to use it. Furthermore, it can be provided that a passenger like the co-driver cannot override the driver 102 and vice versa. For example, when the driver 102 is in control of the application, the passenger cannot use gestures to control the application, meaning that the one controlling the HMI has to release control so that the other can take control again.

In the following, some examples of panel controls are provided, wherein each application (screen) may have its own unique controls. It will be appreciated that the following list is only exemplary and not limiting. To switch between applications, the user can use Move-Right and MoveLeft gestures.

Music: A user can change the volume using clockwise & anticlockwise gestures, or can go to next/previous song using MoveTop and MoveDown gestures. Also, the user may click on pause play, next or previous using click gesture.

AC: A user may turn on/off the AC and change the mode between hot and cold using click gestures. By using the clockwise and the anticlockwise gestures, the user may change the temperature.

Lock: A user may lock/unlock the vehicle using the click gesture or MoveTop and MoveDown gestures.

Windows: A user may select a window using the click gesture, and then they may lower or raise the window using MoveTop and MoveDown gestures.

Phone: The user may use hand gestures to accept, decline or make phone calls.

Cluster/Speed meter/Tank: The HMI may also be able to display the cluster including the car speed, tank, etc.

Diagnostics: This may show the broken parts of the vehicle in a red color with no user interaction. The user can click on a part to diagnose it.

Help: This may show all available gestures with no interaction (it could be more detailed with instructions).

While above at least one exemplary embodiment of the present invention has been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described apparatuses and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

LIST OF REFERENCE SIGNS

| | |
|---|---|
| 1-21 | landmarks of a hand |
| 100 | vehicle |
| 101 | driver seat |
| 102 | driver |
| 103 | display device |
| 104 | camera |
| 105 | camera |
| 106 | detection area |
| 200 | human-machine interface (HMI) |
| 201-205 | functional components of the HMI |
| 300 | method of controlling a HMI |
| 301-306 | processes or steps of the method 300 |
| 310-316 | data or parameters in the method 300 |
| 400 | landmark model of a hand |
| 500 | hand |
| 501 | index finger |
| 502 | pointing direction |
| 503 | projected point on the display device |
| 600 | GUI controlled by the driver |
| 700 | GUI controlled by the co-driver |

**Claims**

1. A method (300) of controlling a human-machine interface (200) in a vehicle (100), the human-machine interface (300) comprising an input device (104, 105) for receiving a user input and a display device (103) for displaying a graphical user interface, the method comprising:

- obtaining monitoring data of at least a portion of a passenger compartment of the vehicle (100) by means of the input device, the input device comprising a detection device (104, 105) with a detection area (106) that overlaps the portion of the passenger compartment, wherein the portion of the passenger compartment includes at least two seats (101) of the vehicle (100);
- processing the monitoring data to obtain hand gesture data from the monitoring data by detecting in the monitoring data a hand gesture performed by a passenger (102) of the vehicle (100) as the user input;
- determining one of the at least two seats (101) in which the passenger (102) is seated who performs the hand gesture for which the hand gesture data are obtained; and
- controlling the graphical user interface depending on the detected hand gesture and the determined seat.

2. The method of claim 1, further comprising processing the monitoring data so as to obtain seat occupancy data, the seat occupancy data specifying for each of the at least two seats (101) a respective seat occupancy state, wherein the seat occupancy data are obtained before processing the monitoring data to obtain the hand gesture data.

3. The method of claim 2, wherein the hand gesture data are obtained only for seats for which the seat occupancy state is determined as occupied, wherein processing the monitoring data to obtain hand gesture data comprises determining a bounding box of one hand or both hands of a passenger in an occupied seat.

4. The method of any one of the preceding claims, wherein, while a hand gesture is detected for a passenger (102), any hand gesture of any other passenger is disregarded.

5. The method of any one of the preceding claims, wherein controlling the graphical user interface comprises displaying the graphical user interface at a position on the display device (103) that depends on the position of the seat (102) in which the passenger (101) is seated who performs the hand gesture.

6. The method of any one of the preceding claims, wherein processing the monitoring data to obtain hand gesture data comprises detecting a plurality of landmarks (400) for a respective hand (500), wherein the hand gesture performed by the passenger (102) is detected using the detected landmarks (400).

7. The method of claim 6, wherein the detected landmarks (400) are input into a gesture classification model, wherein an output of the gesture classification model specifies the hand gesture performed by the passenger (102).

8. The method of claim 7, wherein the hand gesture specified by the gesture classification model includes at least one of a hand posture classification and a pointing finger motion classification.

9. The method of claim 8, further comprising determining a projection of a pointing finger (501) to a location (503) on the display device (103), wherein the projection is determined by determining a finger vector direction using the landmarks of the respective finger (501).

10. The method of claim 8 or 9, wherein, if the hand gesture is classified as a pointing finger motion classification, the hand gesture is determined by processing the monitoring data for at least two subsequent points in time.

11. The method of any one of the claims 6 to 10, wherein processing the monitoring data to obtain hand gesture data comprises determining 3D coordinates of the detected landmarks (400).

12. A data processing system, comprising at least one processor configured to perform the method according to one of the preceding claims, and at least one display device (103) configured to display a graphical user interface, and an input device (104, 105) configured to receive a user input.

13. The system of claim 12, wherein the display device (103) is a head-up display.

14. The system according to claim 12 or 13, wherein the input device comprises a detection device, which comprises at least one camera (104, 105) and/or at least one 3D sensor.

15. A computer program or a computer program product, comprising instructions, which when executed on one or more processors of a system according to any one of claims 12 to 14 cause the system to perform the method according to any one of claims 1 to 11.

100

101 102 103

105

106 104

**Fig. 1**

200

201

202 203

204 205

**Fig. 2**

300

310

301

311

302

312

303

313

304

317

305

306

315

314

316

**Fig. 3**

**Fig. 4**

**Fig. 5**

600

**Fig. 6**

700

**Fig. 7**

**EUROPEAN SEARCH REPORT**

Application Number

EP 24 15 6500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/070963 A1 (JANG SUHYUNG [KR] ET AL) 7 March 2019 (2019-03-07) | 1,4,5, 12,14,15 | INV. B60K35/10 |
| Y | * paragraphs [0137], [0166] - [0168]; figures 1, 3, 10 * | 6-11 | |
| X | US 2017/249718 A1 (WUNDERLICH MATTHIAS [DE] ET AL) 31 August 2017 (2017-08-31) * figures 3-6 * | 1,12,15 | |
| X | WO 2022/157090 A1 (SONY SEMICONDUCTOR SOLUTIONS CORP [JP] ET AL.) 28 July 2022 (2022-07-28) * figure 5 * | 1,12,15 | |
| Y | US 2022/198747 A1 (SAVAROCHE KIM [FR]) 23 June 2022 (2022-06-23) * paragraph [0034] * | 6-11 | |
| A | DE 10 2023 000349 A1 (MERCEDES BENZ GROUP AG [DE]) 23 March 2023 (2023-03-23) * paragraphs [0033] - [0035] * | 2,3 | |

TECHNICAL FIELDS SEARCHED (IPC)

B60K
G06V
G06F

The present search report has been drawn up for all claims

| Place of search | Date of completion of the search | Examiner |
|---|---|---|
| Munich | 5 November 2024 | Brachmann, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 600 066 A1**

## ANNEX TO THE EUROPEAN SEARCH REPORT
## ON EUROPEAN PATENT APPLICATION NO.

EP 24 15 6500

05-11-2024

| Patent document cited in search report | Publication date | Patent family member(s) | | Publication date |
|---|---|---|---|---|
| US 2019070963 A1 | 07-03-2019 | EP | 3415394 A1 | 19-12-2018 |
| | | US | 2017282717 A1 | 05-10-2017 |
| | | US | 2019070963 A1 | 07-03-2019 |
| | | WO | 2017138702 A1 | 17-08-2017 |
| US 2017249718 A1 | 31-08-2017 | CN | 107107753 A | 29-08-2017 |
| | | DE | 102014016222 A1 | 04-05-2016 |
| | | EP | 3212453 A1 | 06-09-2017 |
| | | US | 2017249718 A1 | 31-08-2017 |
| | | WO | 2016066258 A1 | 06-05-2016 |
| WO 2022157090 A1 | 28-07-2022 | CN | 116848562 A | 03-10-2023 |
| | | EP | 4281946 A1 | 29-11-2023 |
| | | WO | 2022157090 A1 | 28-07-2022 |
| US 2022198747 A1 | 23-06-2022 | NONE | | |
| DE 102023000349 A1 | 23-03-2023 | NONE | | |

EPO FORM P0459